# EUROPEAN PATENT APPLICATION

(11) **EP 4 641 248 A1**
(43) Date of publication of application: **29.10.2025**
(21) Application number: 24172629.8
(22) Date of filing: 26.04.2024
(51) Int. Cl.: G01S 7/35, G01S 13/32, G01S 13/34, G01S 13/44, G01S 13/58, G01S 13/931, H04B 7/0413, H04B 7/06

(54) **A VEHICLE RADAR SYSTEM WITH A PLURALITY OF GROUPED TX CHANNELS**

(71) Applicant: Magna Electronics Sweden AB, 447 37 Vårgårda (SE)
(72) Inventor: MOSS, Jonathan, 85716 Unterschleissheim (DE); FUCHS, Martin, 85716 Unterschleissheim (DE)
(74) Representative: Westpatent AB

(57) **Abstract**

The present disclosure relates to a vehicle radar system (101) comprising a control unit (130) and a transceiver unit (110) that in turn comprises at least two groups (220, 221; 420, 421) of transmitter antenna ports (210a, 210b; 210c, 210d) in corresponding transmitter (Tx) channels (230a, 230b, 230c, 230d), and a transmitter unit (208) arranged to generate radar waveforms (204a, 204b, 204c, 204d; 604, 604a, 604b). The transmitter unit (208) is adapted to feed each transmitter antenna port (210a, 210b, 210c, 210d) with a corresponding radar waveform (204a, 204b, 204c, 204d; 604, 604a, 604b), and each group (220, 221; 420, 421) comprises at least one transmitter antenna port (210a, 210b; 210c, 210d). The control unit (130) is adapted to switch between the groups (220, 221; 420, 421) of transmitter antenna ports (210a, 210b, 210c, 210d) in a random manner such that only one group (220, 221; 420, 421) of transmitter antenna ports at a time is transmitting a corresponding radar waveform (204a, 204b, 204c, 204d; 604, 604a, 604b) .

## Description

The present disclosure relates to a vehicle radar system comprising a control unit and a transceiver unit that in turn comprises at least two groups of transmitter antenna ports and a transmitter unit arranged to generate radar waveforms.

A radar system comprises means for generating radar signals that are transmitted, reflected and received by means of appropriate antennas comprised in the radar system. The signal may comprise so-called chirp ramps in an FMCW (Frequency Modulated Continuous Wave) signal with a certain amplitude where the frequency is continuously ramped between two values, the chirp signal thus being in the form of a continuous sinusoid where the frequency varies from a first low frequency to a second high frequency over the course of each chirp ramp.

Such a radar system may be in the form of a multiple-input multiple-output (MIMO) radar as disclosed in the document US 2011140949 which describes a MIMO radar where a transmitter transmits FMCW signals and a receiver receives echo signals which are mixed with the transmitted signal. The mixed signal is then converted into a digital signal.

Alternatively, the radar signals may be of the form of modulated carrier, such that targets may be detected using a receiver such as correlator. MIMO can be accomplished in this case using different modulating sequences, or codes, for the different transmission antennas.

MIMO enables transmitting with several transmitters simultaneously and extract the signal from every transmitter after receiving. One common technique to do this for an FMCW signal is DDMA (Doppler Division Multiple Access). This technique uses a programmable phase shifter for every additional transmitter to modulate an artificial Doppler frequency to every transmitted signal; a first transmitter (Tx) channel doesn't need a phase modulator, only the second, third and fourth, etc. As no two transmitters use the same modulated artificial Doppler frequency, every transmitter is seen on a different location in the Doppler spectrum. DDMA requires the modulated Doppler frequencies to be known to detected signals in the Doppler spectrum to specific transmitters.

However, in the case of DDMA, it is common to use several Tx channels, each of which requires its own phase progression. This causes problems in the Doppler space, which becomes increasingly cluttered, as each target appears as an additional Doppler peak, and the peaks can hide real objects travelling at different relative speeds.

The use of multiple transmitter channels operating at the same time can also be problematic in some countries that define a limit on the total transmission power.

EP 2876460B discloses modulating one transmitted FMCW chirp signal by applying a phase shift to at least some ramps.

The object of the present disclosure is to provide a vehicle radar system which is arranged to counteract the above problems.

This object is obtained by means of a vehicle radar system comprising a control unit and a transceiver unit that in turn comprises at least two groups of transmitter antenna ports in corresponding transmitter (Tx) channels, and a transmitter unit arranged to generate radar waveforms. The transmitter unit is adapted to feed each transmitter antenna port with a corresponding radar waveform, and each group comprises at least one transmitter antenna port. The control unit is adapted to switch between the groups of transmitter antenna ports in a random manner such that only one group of transmitter antenna ports at a time is transmitting a corresponding radar waveform.

This limits the number of Tx channels that are active at the same time, and by switching between the groups of transmitter antenna ports in a random manner, the mean output power can be lowered while maintaining a high degree of efficiency.

According to some aspects, the transceiver unit further comprises a receiver unit and a plurality of receiver antenna arrangements that are adapted to receive signals that have been reflected by one or more target objects. According to some further aspects, the control unit comprises a Digital Signal Processor (DSP) arrangement that is adapted to process digital signals input from the receiver unit. This provides an efficient handling of the digital signals input from the receiver unit 212.

According to some aspects, for each range bin of interest, the DSP arrangement is adapted to perform a Fast Fourier Transform (FFT) for each group of transmitter antenna ports and to insert zeros at sampling instances in the FFT for the groups of transmitter antenna ports that are idle at the corresponding sample times.

This means that a Doppler FFT is applied for each Tx channel to extract relevant information.

According to some aspects, the transmitter unit is arranged to generate Frequency Modulated Continuous Wave (FMCW) radar waveforms, such that the transmitter unit is arranged to feed at least one transmitter antenna port with a corresponding FMCW radar waveform. Furthermore, the Tx channels within a group are separated by means of different artificially generated Doppler positions for the transmitter antenna ports that are transmitting at the moment.

According to some aspects, the artificial Doppler positions used within each group are different to those used in another group, within one radar cycle.

According to some aspects, the transmitter unit is arranged to generate a continuous radar waveform that has been modulated by a pseudo-random code sequence, and to feed the radar waveform to at least one transmitter antenna port.

This can constitute Code Division Multiple Access (CDMA). In CDMA, different CDMA codes are "orthogonal" to each other via separate corresponding Tx channels. Both FMCW and CDMA types of radar waveform can use the same Doppler FFT processing,

According to some aspects, the transmitter unit comprises a signal generator and a phase shifter), where the signal generator is connected to the phase shifter that in turn is connected to the transmitter antenna ports. The phase shifter is a programmable phase shifter that is adapted to modulate an artificial Doppler frequency such that the radar waveforms become Doppler Division Multiple Access (DDMA) modulated.

This means that the artificial Doppler positions can be obtained by means of DDMA modulation. Applying an artificial Doppler modulations such as DDMA normally causes problems in the Doppler domain, which becomes increasingly cluttered, as each target object appears as an additional peak, and the peaks can hide real objects. By means of the present disclosure that comprises switching between the groups of transmitter antenna ports in a random manner, the Tx channels within each group can still be Doppler multiplexed, but the Doppler domain will only be half as cluttered.

According to some aspects, transmitter unit is arranged to generate stepped FMCW radar waveforms constituted by relatively short chirp ramps where the center frequency changes in a linear fashion from chirp ramp to chirp ramp. This means that the present disclosure is applicable for stepped FMCW. Of course, using stepped FMCW is only an example, all types of FMCW are of course possible, including an FMCW where all ramps have the same start frequency and stop frequency, the center frequency not changing.

This object is also obtained by means of methods associated with the above advantages.

### BRIEF DESCRIPTION OF THE DRAWINGS

The present disclosure will now be described more in detail with reference to the appended drawings, where:
- Figure 1: shows a schematic top view of a vehicle;
- Figure 2: schematically illustrates a simplified schematic of a vehicle radar system;
- Figure 3: schematically illustrates a detail of transmitter (Tx) channels according to a first example;
- Figure 4: schematically illustrates a detail of Tx channels according to a second example;
- Figure 5: schematically illustrates a detail of Tx channels according to a third example;
- Figure 6-9: illustrate stepped FMCW radar waveforms;
- Figure 10: schematically illustrates a control unit;
- Figure 11: schematically illustrates a computer program product; and
- Figure 12: shows a flowchart illustrating methods according to the present disclosure.

### DETAILED DESCRIPTION

The inventive concept will now be described more fully hereinafter with reference to the accompanying drawings, in which certain embodiments of the inventive concept are shown. This inventive concept may, however, be embodied in many different forms and should not be construed as limited to the embodiments set forth herein; rather, these embodiments are provided by way of example so that this disclosure will be thorough and complete, and will fully convey the scope of the inventive concept to those skilled in the art. Like numbers refer to like elements throughout the description. Any step or feature illustrated by dashed lines should be regarded as optional.

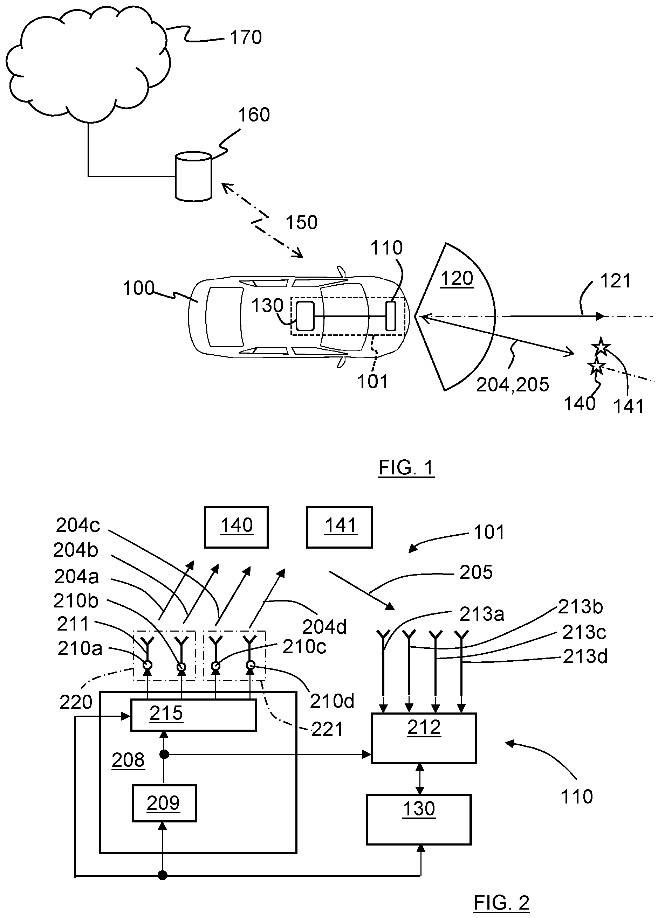

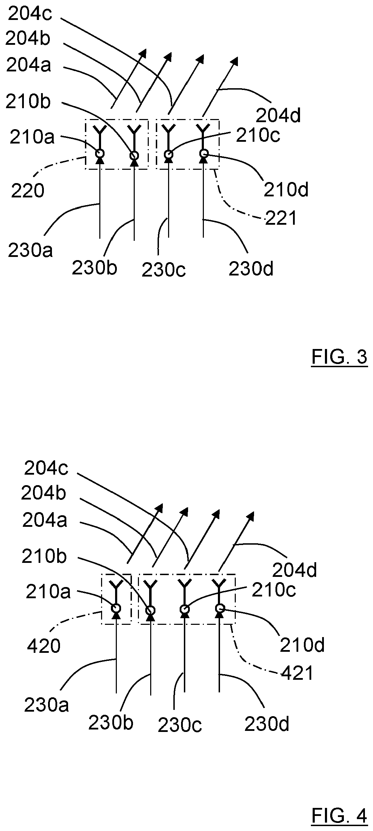

Figure 1 shows a vehicle 100 equipped with a vehicle radar system 101. With reference also to Figure 2 and Figure 3, the vehicle radar system 101 comprises a control unit 130 and a transceiver unit 110 that in turn comprises at least two groups 220, 221of transmitter antenna ports 210a, 210b, 210c, 210d in corresponding transmitter (Tx) channels 230a, 230b, 230c, 230d. Each transmitter antenna ports 210a, 210b, 210c, 210d is associated with a corresponding transmitter antenna arrangement 211 (only one indicated in Figure 2 for reasons of clarity).

In a first example shown in Figure 2 and Figure 3, the transceiver unit 110 comprises a first group 220 that comprises a first transmitter antenna port 210a and a second transmitter antenna port 210b, and a second group 221 that comprises a third transmitter antenna port 210c and a fourth transmitter antenna port 210d.

In a second example shown in Figure 4, the transceiver unit comprises a first group 420 that comprises the first transmitter antenna port 210a and a second group 221 that comprises the second transmitter antenna port 210b, the third transmitter antenna port 210c and the fourth transmitter antenna port 210d.

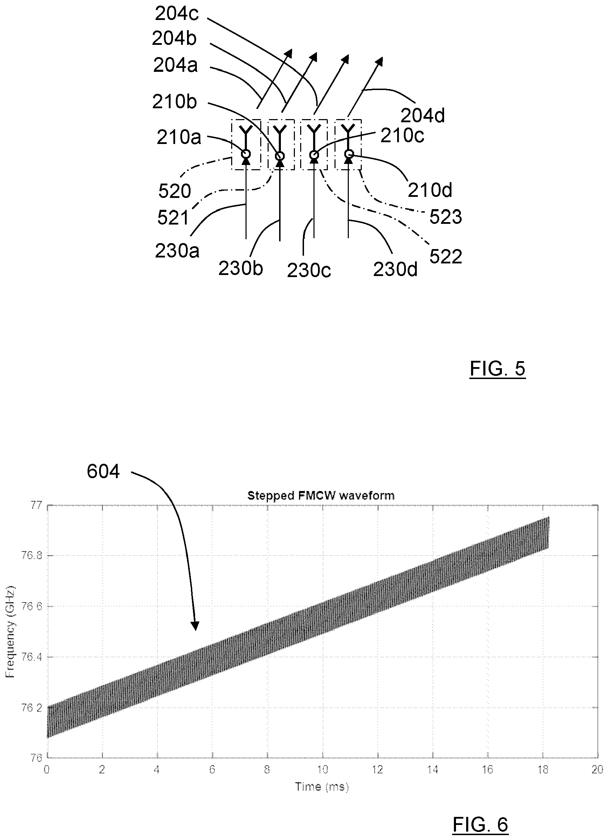

In a third example shown in Figure 5, the transceiver unit comprises a first group 520 that comprises the first transmitter antenna port 210a, a second group 521 that comprises the second transmitter antenna port 210b, a third group 522 that comprises the third transmitter antenna port 210c and a fourth group 523 that comprises the fourth transmitter antenna port 210d.

With continued reference to Figure 1 and Figure 2, the transceiver unit 110 in turn comprises a transmitter unit 208 arranged to generate radar waveforms 204a, 204b, 204c, 204d. Each group 220, 221; 420, 421 comprises at least one transmitter antenna port 210a, 210b, 210c, 210d.

The transmitter unit 208 is adapted to feed each transmitter antenna port 210a, 210b, 204c, 204d with a corresponding radar waveform 204a, 204b, 204c, 204d.

The vehicle radar system 101 may be comprised in a single physical unit or may be distributed over more than one physical unit. Some parts of the radar system functionality may even be comprised in a remote server 160 or cloud-based resource 170 connected to the vehicle 100 via wireless link 150.

According to some aspects, the transceiver unit 110 further comprises a receiver unit 212 and a plurality of receiver antenna arrangements 213a, 213b, 213c, 213d that are adapted to receive signals 205 that have been reflected by one or more target objects 140, 141.

The vehicle radar system 101 normally is associated with a field of view 120. In case of a front vehicle radar system, a boresight direction 121 of the radar often coincides with a center line of the field of view 120 in a forward direction of the vehicle 100. In case the vehicle radar system 101 instead, or also, is configured as a side radar or rear corner radar, then a boresight direction may point in some other angle compared to the forward direction of the vehicle 100.

As noted above, the vehicle radar system 101 may be connected via wireless link 150 to a remote server 160, which in turn may be comprised in a cloud-based resource 170 or remote network. This server and network may be configured to assist the vehicle 100 in performing various operations such as radar signal processing, interference mitigation, beamforming, and the like.

According to the present disclosure, the control unit 130 is adapted to switch between the groups 220, 221; 420, 421 of transmitter antenna ports 210a, 210b, 210c, 210d in a random manner such that only one group 220, 221; 420, 421 of transmitter antenna ports at a time is transmitting a corresponding radar waveform 204a, 204b, 204c, 204d.

The inventive concept of using groups and switching off groups limits the number of Tx channels that are active at the same time. By switching between the groups of transmitter antenna ports 210a, 210b, 210c, 210d in a random manner, the mean output power can be lowered while maintaining a high degree of efficiency.

According to some aspects, the radar waveform 204a, 204b, 204c, 204d comprises signal components that either have a constant center frequency or have a center frequency that increases or decreases linearly during a certain time in a repetitive manner. Examples of such radar waveforms will be provided later.

According to some aspects, in this context, the term random means that for each relevant time instance, one group is selected from N groups in a manner that does not reveal an obvious pattern. The sequence can thus be presented by a vector of length L where each position holds a number between 1 and L. The random sequence may be generated using a random number generator, or may be predefined and read from memory. The time instances available for any one group would typically be distributed across all L time instances but should not be periodic, e.g. not systematically alternating between two or more groups.

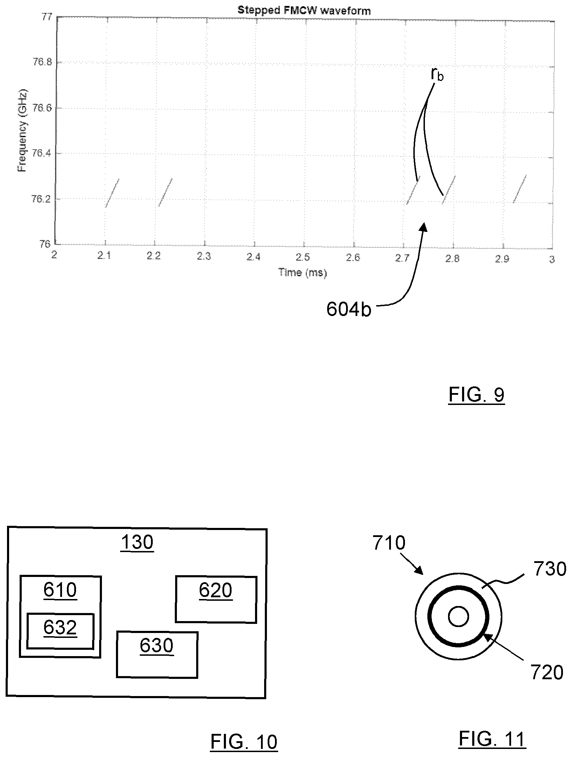

According to some aspects, with reference also to Figure 10, the control unit 130 comprises a Digital Signal Processor (DSP) arrangement 632 that is adapted to process digital signals input from the receiver unit 212. This provides an efficient handling of the digital signals input from the receiver unit 212.

According to some further aspects, for each range bin of interest, the DSP arrangement 632 is adapted to perform a Fast Fourier Transform (FFT) for each group 220, 221; 420, 421 of transmitter antenna ports 210a, 210b, 210c, 210d and to insert zeros at the sampling instances in the FFT for the groups 220, 221; 420, 421 of transmitter antenna ports 210a, 210b, 210c, 210d that are idle at the corresponding sample times.

This means that a Doppler FFT is applied for each Tx channel 230a, 230b, 230c, 230d to extract relevant information.

According to some aspects, with reference to Figure 2, the transmitter unit 208 is arranged to generate Frequency Modulated Continuous Wave (FMCW) radar waveforms that comprise chirp ramps r as illustrated in the example of Figures 6-9, such that the transmitter unit 208 is arranged to feed at least one transmitter antenna port 210a, 210b, 210c, 210d with a corresponding FMCW radar waveform 204a, 204b, 204c, 204d. The Tx channels 230a, 230b, 230c, 230d within a group are separated by means of different artificially generated Doppler positions for the transmitter antenna ports 210a, 210b, 210c, 210d that are transmitting at the moment.

With renewed reference to Figure 2and 3, when performing Doppler FFT processing of each range bin, it is in the first example necessary to perform two Doppler FFTs. The first FFT would be applied only to the first radar waveform 204a and the second radar waveform 204b transmitted via the transmitter antenna ports 210a, 210b in the first group 220 where zeros are inserted for the chirp ramps of the transmitter antenna ports 210c, 210d in the second group 221.

The first radar waveform 204a and the second radar waveform 204b are two transmitted signals from the same group, the first group 220. Hence these radar waveforms 204a, 204b are separated in the Doppler domain and there is only a single Doppler FFT, the first FFT required, as second radar waveform 204b would typically have an artificial Doppler that shifts it to a different doppler bin than the first radar waveform 204a. Correspondingly, the second FFT would be applied only the third radar waveform 204c and the fourth waveform 204d transmitted via the transmitter antenna ports 210c, 210d in the second group 221 where zeros are inserted for the chirp ramps of the transmitter antenna ports 210a, 210b in the first group 220.

With renewed reference to Figure 4 and 5, when performing Doppler FFT processing of each range bin, it is in the second example necessary to perform two Doppler FFTs as well since there are two groups 420, 421, and int the third example it is necessary to perform four Doppler FFTs since there are four groups 520, 521, 522, 523. Figure 4 illustrates that generally there may be different number of transmitter antenna ports in different groups 420, 421, and Figure 5 illustrates a special case where each group 520, 521, 522, 523 may contain only one transmitter antenna port.

In this context, the term range bin of interest refers to range bins that are currently being processed. Typically the DSP arrangement 632 would perform the Doppler FFT across all the range bins from a distance of 0 meter up to the maximum distance of the radar system, where each range bin may correspond to a range of 0.25m, and other range bins would be ignored. The Doppler FFT for each range bin has the benefit of separating all the target objects that are moving at different speeds at that range as well as integrating the energy of each target, thus enhancing its signal to noise ratio.

For example, the range bin of interest may be the range bins that start at range bin 1 (0m) and goes through each range bin up to a maximum range bin N (e.g. 300m).

By inserting zeros in the FFT according to the above, sidelobes will appear in the Doppler spectrum. The sidelobes can be minimized by the use of well-chosen on-off code sequences that is used to select between the groups 220, 221. The sidelobes can further be minimized by using a large number of chirp ramps r. There may be a further benefit in changing the sequence of random switching between the groups 220, 221 each radar cycle to average out the sidelobes.

A common way of multiplexing more than one Tx transmission channel is to apply an artificial doppler modulation to the Tx channels. This can be the form of a linear RF phase increment to each successive chirp ramp, and is applicable for groups comparing more than one antenna port.

According to some aspects, the artificial Doppler positions used within each group 220, 221; 420, 421 are different to those used in another group, within one radar cycle.

According to some aspects, the transmitter unit 208 comprises a signal generator 209 and a phase shifter 215, where the signal generator 209 is connected to the phase shifter 215 that in turn is connected to the transmitter antenna ports 210a, 210b, 210c, 210d, where the phase shifter 215 is a programmable phase shifter 215 that is adapted to modulate an artificial Doppler frequency such that the radar waveforms 204a, 204b, 204c, 204d become DDMA modulated.

This means that the artificial Doppler positions can be obtained by means of DDMA modulation.

For example, the first transmitter antenna port 210a can be modulated with phase a phase increment of 0° for successive chirp ramps, and the second transmitter antenna port 210b can be modulated with phase a phase increment of 90° for successive chirp ramps.

However, applying an artificial Doppler modulations such as DDMA normally causes problems in the Doppler domain, which becomes increasingly cluttered, as each target object appears as an additional peak, and the peaks can hide real objects.

By means of the present disclosure that comprises switching between the groups of transmitter antenna ports 210a, 210b, 204c, 204d in a random manner, the Tx channels 230a, 230b, 230c, 230d within each group can still be Doppler multiplexed, but the Doppler domain will only be half as cluttered.

According to some aspects, the transmitter unit 208 is arranged to generate a continuous radar waveform that has been modulated by a pseudo-random code sequence such as a binary sequence, and to feed the radar waveform to at least one transmitter antenna port 210a, 210b, 210c, 210d. This can constitute Code Division Multiple Access (CDMA). In CDMA, different CDMA codes are "orthogonal" to each other via separate corresponding Tx channels.

Both FMCW and CDMA types of radar waveform can use the same Doppler FFT processing, with the use of zeros at the sampling instances when the group in question is not active.

CDMA can be used to measure the range of the one or more target objects in the environment. The Doppler FFT can then be used to identify multiple target objects at the same range but with different velocities and to reveal what velocity each target object has.

This means that CDMA saves on the need for the Range FFT process, which is used in the case of FMCW. CDMA however needs a correlator functionality (not shown) at the receiver unit 212, that is used to create a peak corresponding to each target object, separated in the range domain.

According to some aspects, with reference also to Figures 6-9, the transmitter unit 208 is arranged to generate stepped FMCW radar waveforms 604; 604a, 604b constituted by relatively short chirp ramps r; rₐ, r_{b} where the center frequency changes in a linear fashion from chirp ramp r; rₐ, r_{b} to chirp ramp r; rₐ, r_{b}.

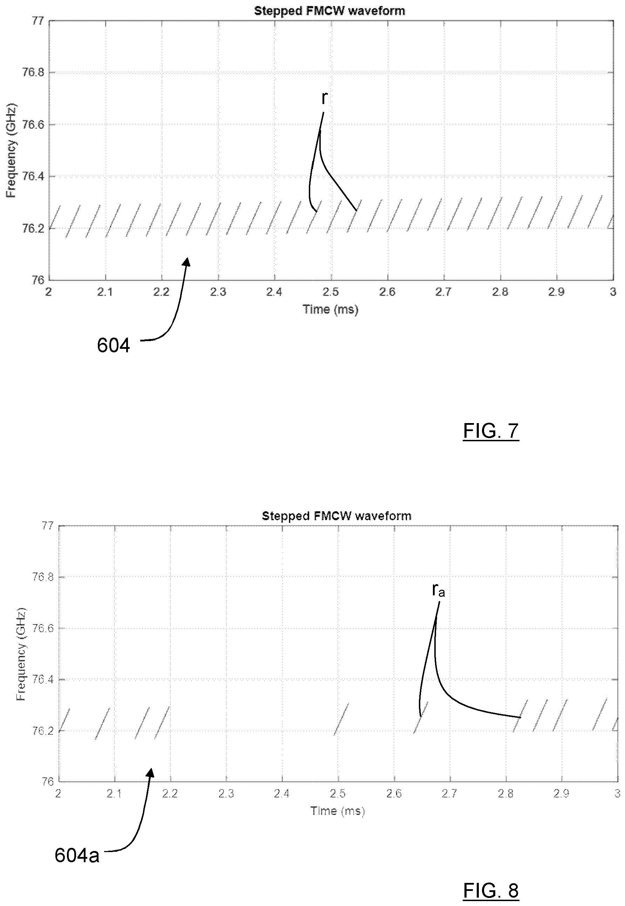

In Figure 6, all chirp ramps r in a radar cycle are shown, and in Figure 7 the chirp ramps for a time span from 2 ms to 3 ms are shown. It is evident that the center frequency changes in a linear fashion from chirp ramp r to chirp ramp r.

Of course, using stepped FMCW is only an example, all types of FMCW are of course possible, including an FMCW where all ramps have the same start frequency and stop frequency, the center frequency not changing.

Figure 8 illustrates the chirp ramps rₐ that are transmitted via the first antenna port 210a, forming the first radar waveform 604a, and Figure 9 illustrates the chirp ramps r_{b} that are transmitted via the second antenna port 210b, forming the second radar waveform 604b. Figure 8 and Figure 9 illustrate the third example described above with reference to Figure 5 where each transmitter antenna port 210a, 210b, 210c, 210d forms its own corresponding group 520, 521, 522, 523, such that each group, and thus each transmitter antenna port 210a, 210b, 210c, 210d transmits its corresponding radar waveform 204a, 204b, 204c, 204d, one at a time, in a random manner.

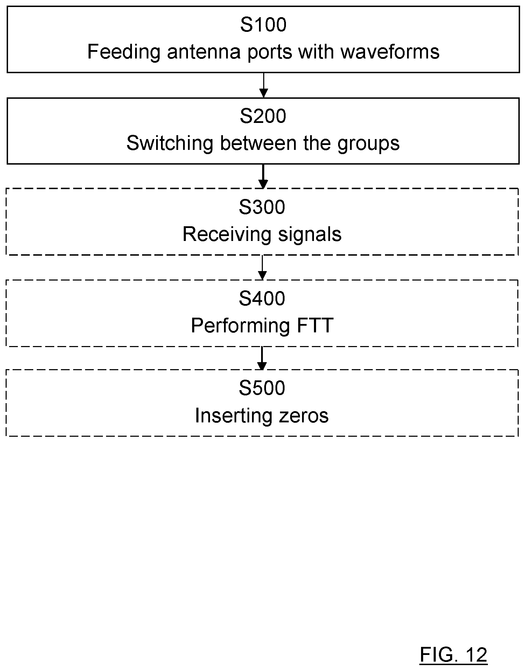

With reference to Figure 12, the present disclosure also relates to a method in a vehicle radar system 101 comprising a control unit 130 and a transceiver unit 110 that in turn comprises at least two groups 220, 221; 420, 421 of transmitter antenna ports 210a, 210b; 210c, 210d in corresponding transmitter (Tx) channels 230a, 230b, 230c, 230d. Each group 220, 221; 420, 421 comprises at least one transmitter antenna port 210a, 210b; 210c, 210d. the method comprises feeding S100 each transmitter antenna port 210a, 210b, 210c, 210d with a corresponding radar waveform 204a, 204b, 204c, 204d; 604, 604a, 604b, 210b; 210c, 210d, and switching S200 between the groups 220, 221; 420, 421 of transmitter antenna ports 210a, 210b, 210c, 210d in a random manner. In this way, only one group 220, 221; 420, 421 of transmitter antenna ports at a time is transmitting a corresponding radar waveform 204a, 204b, 204c, 204d; 604, 604a, 604b.

According to some aspects, the method comprises receiving S300 signals 205 that have been reflected by one or more target objects 140, 141, and performing S400 a Fast Fourier Transform (FFT) for each group 220, 221; 420, 421 of transmitter antenna ports 210a, 210b, 210c, 210d. The method further comprises inserting S500 zeros at sampling instances in the FFT for the groups 220, 221; 420, 421 of transmitter antenna ports 210a, 210b, 210c, 210d that are idle at the corresponding sample times.

According to some aspects, the method comprises feeding at least one transmitter antenna port 210a, 210b, 210c, 210d with a corresponding Frequency Modulated Continuous Wave (FMCW) radar waveform 204a, 204b, 204c, 204d; 604, 604a, 604b. The Tx channels 230a, 230b, 230c, 230d within a group are separated by means of different artificially generated Doppler positions for the transmitter antenna ports 210a, 210b, 210c, 210d that are transmitting at the moment.

According to some aspects, the artificial Doppler positions used within each group 220, 221; 420, 421 are different to those used in another group, within one radar cycle.

According to some aspects, the method comprises generating a continuous radar waveform that has been modulated by a pseudo-random code sequence, and to feed the radar waveform to at least one transmitter antenna port 210a, 210b, 210c, 210d.

According to some aspects, the method comprises feeding at least one transmitter antenna port 210a, 210b, 210c, 210d with a corresponding stepped FMCW radar waveforms 604; 604a, 604b constituted by relatively short chirp ramps r; rₐ, r_{b} where the center frequency changes in a linear fashion from chirp ramp r; rₐ, r_{b} to chirp ramp r; rₐ, r_{b}.

Figure 10 schematically illustrates, in terms of a number of functional units, the components of the control unit 130 according to an embodiment. Processing circuitry 610 is provided using any combination of one or more of a suitable central processing unit (CPU), multiprocessor, microcontroller, digital signal processor (DSP), dedicated hardware accelerator, etc., capable of executing software instructions stored in a computer program product, e.g. in the form of a storage medium 630. The processing circuitry 610 may further be provided as at least one application specific integrated circuit (ASIC), or field programmable gate array (FPGA).

Particularly, the processing circuitry 610 is configured to cause the control unit 130 to perform a set of operations, or steps. These operations, or steps, were discussed above in connection to the various radar transceivers and methods. For example, the storage medium 630 may store the set of operations, and the processing circuitry 610 may be configured to retrieve the set of operations from the storage medium 630 to cause the control unit 130 to perform the set of operations. The set of operations may be provided as a set of executable instructions. Thus, the processing circuitry 610 is thereby arranged to execute methods and operations as herein disclosed.

The storage medium 630 may also comprise persistent storage, which, for example, can be any single one or combination of magnetic memory, optical memory, solid state memory or even remotely mounted memory.

The control unit 130 may further comprise a communications interface 620 for communications with at least one other unit. As such, the communications interface 620 may comprise one or more transmitters and receivers, comprising analogue and digital components and a suitable number of ports for wired or wireless communication.

The processing circuitry 610 is adapted to control the general operation of the control unit 130 e.g. by sending data and control signals to the external unit and the storage medium 630, by receiving data and reports from the external unit, and by retrieving data and instructions from the storage medium 630. Other components, as well as the related functionality, of the control unit 130 are omitted in order not to obscure the concepts presented herein.

Figure 11 shows a computer program product 710 comprising computer executable instructions 720 arranged on a computer readable medium 730 to execute any of the methods disclosed herein.

The present disclosure is not limited to the examples provided, but may vary freely within the scope of the appended claims.

In this context, a radar cycle is one observation phase during which the vehicle radar system 101 is arranged to acquire data, process said data on several signal processing levels and to send out available results. This can be a fixed time interval (for example 40 to 60 milliseconds), or it can be a dynamic time interval depending on environment conditions and processing load.

In this context, an artificially generated Doppler position relates to the Doppler FFT, which would have multiple peaks in the FFT, each peak corresponding to one transmitter antenna port. The "positions" would be within the FFT, e.g. indices 10, 90, 170 from an FFT output, which may be of length 256.

Also, an artificially generated Doppler frequency relates to the effect of phase modulating each transmitter antenna port by a phase shift that progresses from chirp to chirp and creates an apparent Doppler frequency, which is "artificially" generated since it does not relate to movement of the target.

Furthermore, artificially generated Doppler modulation relates to the phase modulation of the transmitter antenna ports that creates the artificial apparent Doppler frequencies.

## Claims

1. A vehicle radar system (101) comprising a control unit (130) and a transceiver unit (110) that in turn comprises at least two groups (220, 221; 420, 421) of transmitter antenna ports (210a, 210b; 210c, 210d) in corresponding transmitter, Tx, channels (230a, 230b, 230c, 230d), and a transmitter unit (208) arranged to generate radar waveforms (204a, 204b, 204c, 204d; 604, 604a, 604b), where the transmitter unit (208) is adapted to feed each transmitter antenna port (210a, 210b, 210c, 210d) with a corresponding radar waveform (204a, 204b, 204c, 204d; 604, 604a, 604b), and where each group (220, 221; 420, 421) comprises at least one transmitter antenna port (210a, 210b; 210c, 210d), **characterized in that** the control unit (130) is adapted to switch between the groups (220, 221; 420, 421) of transmitter antenna ports (210a, 210b, 210c, 210d) in a random manner such that only one group (220, 221; 420, 421) of transmitter antenna ports at a time is transmitting a corresponding radar waveform (204a, 204b, 204c, 204d; 604, 604a, 604b).

2. The vehicle radar system (101) according to claim 1, wherein the transceiver unit (110) further comprises a receiver unit (212) and a plurality of receiver antenna arrangements (213a, 213b, 213c, 213d) that are adapted to receive signals (205) that have been reflected by one or more target objects (140, 141).

3. The vehicle radar system (101) according to claim 2, wherein the control unit (130) comprises a Digital Signal Processor, DSP, arrangement (632) that is adapted to process digital signals input from the receiver unit (212).

4. The vehicle radar system (101) according to claim 3, wherein, for each range bin of interest, the DSP arrangement (632) is adapted to perform a Fast Fourier Transform, FFT, for each group (220, 221; 420, 421) of transmitter antenna ports (210a, 210b, 210c, 210d) and to insert zeros at sampling instances in the FFT for the groups (220, 221; 420, 421) of transmitter antenna ports (210a, 210b, 210c, 210d) that are idle at the corresponding sample times.

5. The vehicle radar system (101) according any one of the previous claims, wherein the transmitter unit (208) is arranged to generate Frequency Modulated Continuous Wave, FMCW, radar waveforms, such that the transmitter unit (208) is arranged to feed at least one transmitter antenna port (210a, 210b, 210c, 210d) with a corresponding FMCW radar waveform (204a, 204b, 204c, 204d; 604, 604a, 604b), where the Tx channels (230a, 230b, 230c, 230d) within a group are separated by means of different artificially generated Doppler positions for the transmitter antenna ports (210a, 210b, 210c, 210d) that are transmitting at the moment.

6. The vehicle radar system (101) according to claim 5, wherein the artificial Doppler positions used within each group (220, 221; 420, 421) are different to those used in another group, within one radar cycle.

7. The vehicle radar system (101) according any one of the previous claims, wherein the transmitter unit (208) is arranged to generate a continuous radar waveform that has been modulated by a pseudo-random code sequence, and to feed the radar waveform to at least one transmitter antenna port (210a, 210b, 210c, 210d).

8. The vehicle radar system (101) according to any one of the previous claims, wherein the transmitter unit (208) comprises a signal generator (209) and a phase shifter (215), where the signal generator (209) is connected to the phase shifter (215) that in turn is connected to the transmitter antenna ports (210a, 210b, 210c, 210d), where the phase shifter (215) is a programmable phase shifter (215) that is adapted to modulate an artificial Doppler frequency such that the radar waveforms (204a, 204b, 204c, 204d; 604, 604a, 604b) become Doppler Division Multiple Access, DDMA, modulated.

9. The vehicle radar system (101) according to any one of the previous claims, wherein the transmitter unit (208) is arranged to generate stepped FMCW radar waveforms (604; 604a, 604b) constituted by relatively short chirp ramps (r; rₐ, r_{b}) where the center frequency changes in a linear fashion from chirp ramp (r; rₐ, r_{b}) to chirp ramp (r; rₐ, r_{b}).

10. A method in a vehicle radar system (101) comprising a control unit (130) and a transceiver unit (110) that in turn comprises at least two groups (220, 221; 420, 421) of transmitter antenna ports (210a, 210b; 210c, 210d) in corresponding transmitter, Tx, channels (230a, 230b, 230c, 230d), where each group (220, 221; 420, 421) comprises at least one transmitter antenna port (210a, 210b; 210c, 210d), where the method comprises
feeding (S100) each transmitter antenna port (210a, 210b, 210c, 210d) with a corresponding radar waveform (204a, 204b, 204c, 204d; 604, 604a, 604b), 210b; 210c, 210d), **characterized in that** the method comprises
switching (S200) between the groups (220, 221; 420, 421) of transmitter antenna ports (210a, 210b, 210c, 210d) in a random manner such that only one group (220, 221; 420, 421) of transmitter antenna ports at a time is transmitting a corresponding radar waveform (204a, 204b, 204c, 204d; 604, 604a, 604b) .

11. The method according to claim 10, wherein the method comprises
receiving (S300) signals (205) that have been reflected by one or more target objects (140, 141);
performing (S400) a Fast Fourier Transform, FFT, for each group (220, 221; 420, 421) of transmitter antenna ports (210a, 210b, 210c, 210d), and
inserting (S500) zeros at sampling instances in the FFT for the groups (220, 221; 420, 421) of transmitter antenna ports (210a, 210b, 210c, 210d) that are idle at the corresponding sample times.

12. The method according any one of the claims 10 or 11, wherein the method comprises
feeding at least one transmitter antenna port (210a, 210b, 210c, 210d) with a corresponding Frequency Modulated Continuous Wave, FMCW, radar waveform (204a, 204b, 204c, 204d; 604, 604a, 604b), where the Tx channels (230a, 230b, 230c, 230d) within a group are separated by means of different artificially generated Doppler positions for the transmitter antenna ports (210a, 210b, 210c, 210d) that are transmitting at the moment.

13. The method according to claim 12, wherein the artificial Doppler positions used within each group (220, 221; 420, 421) are different to those used in another group, within one radar cycle.

14. The method according any one of the claims 10-13, wherein the method comprises generating a continuous radar waveform that has been modulated by a pseudo-random code sequence, and to feed the radar waveform to at least one transmitter antenna port (210a, 210b, 210c, 210d).

15. The method according to any one of the claims 10-14, wherein the method comprises feeding at least one transmitter antenna port (210a, 210b, 210c, 210d) with a corresponding stepped FMCW radar waveforms (604; 604a, 604b) constituted by relatively short chirp ramps (r; rₐ, r_{b}) where the center frequency changes in a linear fashion from chirp ramp (r; rₐ, r_{b}) to chirp ramp (r; rₐ, r_{b}).
